# EUROPEAN PATENT SPECIFICATION

(11) **EP 1 432 943 B1**
(45) Date of publication and mention of the grant of the patent: **24.08.2005**
(21) Application number: 02800185.7
(22) Date of filing: 30.09.2002
(51) Int. Cl.: F16L 37/088

(54) **CONNECTIONS**
VERBINDUNGEN
CONNEXIONS

(30) Priority: 04.10.2001 GB 0123814; 18.01.2002 GB 0201104; 17.07.2002 GB 0216557
(43) Date of publication of application: 30.06.2004
(73) Proprietor: Oystertec plc, North Yorkshire YO43 3BG (GB)
(72) Inventor: DAVIDSON, Paul, Anthony, Prestbury, Cheshire SK10 4BH (GB)
(74) Representative: Goddard, David John
(86) International application number: PCT/GB2002/004402
(87) International publication number: WO 2003/029716

(56) References cited:
- EP-A- 0 287 791
- EP-A- 0 797 040

## Description

The invention relates to a fitting suitable for the connection of a first body and a second body. Whilst, the invention has been designed with pipe connections in mind, it should be appreciated that the bodies may be other than pipes and may be of various types and shapes and made from various materials.

Known means for connecting two bodies, e.g. pipes, are typically complex, e.g. they involve intricate machining, include a large number of parts, and the parts are difficult to assemble in the field where fitting is required. The known fittings are further complicated where high pressures are involved, e.g. as with certain hydraulic applications, and/or where small bore bodies are involved.

EP-A-0287791 describes a push-in type coupling but has the serious disadvantage of being susceptible to decoupling under conditions of vibration or shock.

It is an aim of the invention to provide a connection system for connecting bodies together in which these problems are overcome or reduced.

According to the invention there is provided an assembly for securing two bodies, the assembly comprising a first body, the first body having a mouth portion for receiving a second body, means for sealing the first body against the second body, and means for securing the first body to the second body, the securing means comprising a first securing member for engagement with the second body, wherein the first securing member is for at least partial location inside the mouth portion and has means for engagement with the first body thereby to prevent removal of the second body from the mouth portion of the first body, a second securing member for holding said first securing member in engagement with said first body, the assembly being characterised by said second securing member being at least partially located inside the mouth portion between the second body and the first securing member.

The invention in many embodiments preferably comprises a second securing member for holding the first securing member in engagement with the first body and thereby the first securing member in a second body engaging position. More preferably, the second securing member is for at least partial location inside the mouth portion between the second body and the first securing member.

The first body may be an operating unit, or an intermediate unit for connection to such an operating unit or other system. The first body may, for example, be an operating unit such as those found in motor vehicles, e.g. brake cylinder blocks. The second body may, for example, be a pipe. The first body may, for example, be an adapter for connecting a gas pipe on a gas appliance such as a gas stove.

Alternatively, the first body may be a connector for connecting the second body to still another body in which case the first body may have one or more additional mouth portions, each for receiving another body. For example, the first body may be a connector for two pipes. The means for connection to the other bodies may also comprise a fitting assembly according to the invention.

Preferably, the second body is provided with an upset or protrusion on its external surface. Preferably, the upset is circumferentially extending. An upset provided on the external surface on the second body has the advantage that if the second body has a bore, e.g. where it is a pipe, the bore is not affected. Preferably, the first securing member is for engagement with the upset. More, preferably, an end of the first securing member is for engagement with the upset. The upset, moreover, may limit forward travel of the second body inside the first body, e.g. by engagement of the upset with an abutment surface in the mouth of the first body. Alternatively, the second body may be provided with a groove on its external surface whereby the first securing member is for engagement with the groove.

Preferably, the first securing member is in the form of a ring or cylinder for location around the second body. Preferably, the end of the first securing member remote from the end which is for engaging the second body is deformable, preferably radially deformable. The ring or cylinder may be circumferentially discontinuous over at least a portion of its length, for example, the cylinder may comprise a longitudinal slit in its body. Preferably, the cylinder has a plurality of longitudinal slits, such as four slits for example. Advantageously, the first securing member may be in the form of a single component even when the second body has a small diameter.

Preferably, a recess, e.g. a groove, is provided in the first body such that the first securing member is for engagement in the recess. Preferably, the recess is circumferentially extending. More preferably, the recess is in a wall of the mouth portion of the first body. Further preferably, the first securing member is provided with one or more projections on its external surface for engagement in the recess. The first securing member may have a circumferentially extending projection. The one or more projections may slot into the recess in the first body on insertion of the first securing member.

In one embodiment, preferably, the first securing member is provided for engagement with the second body with a radially inwardly directed portion for engaging the second body and the upset portion thereof. More preferably, the end of the first securing member comprises a radially inwardly directed portion. Thus, a remainder of the first securing member is spaced from the second body and may accommodate the second securing member in the space.

Preferably, the first securing member is retainable on the second body. Preferably, the first securing member is retainable on the upset or protrusion on the second body. The first securing member may have means for retaining the securing member on the second body. Preferably, the means are locatable over the upset or protrusion on the second body. The means for retaining the first securing member on the second body may be provided at or near the end of the first securing member which engages the upset on the second body. The means for retaining the first securing member on the second body preferably comprises an annular portion for location over the upset on the second body and radially inwardly directed portions for location on either side of the upset, thereby to retain the first securing member on the upset of the second body. Preferably, the leading one of the radially inwardly directed portions, i.e. the one which, in use, is furthest inside the mouth of the first body, extends radially inwardly to a lesser extent than the other radially directed portion. The other of the radially inwardly directed portions, i.e. that which is nearer the entrance to the mouth of the first body, may be the radially inwardly directed portion described above which is for engaging the upset on the second body thereby to prevent removal of the second body from the first body. Preferably, the annular portion is resilient so that, at least prior to insertion in the first body, it may deform to allow the leading one of the radially inwardly directed portions to be fitted over the upset and then reform again to positively locate the annular portion over the upset. Thus, it can be seen that the first securing member can be effectively clipped and unclipped to the upset on the second body. The term annular in relation to the annular portion includes both circumferentially continuous or discontinuous. Embodiments where the annular portion is circumferentially discontinuous over at least a portion of its length, e.g. where it comprises one or more slots, may readily provide the resilient properties preferably required. The annular portion may comprise, for example, a plurality of resilient fingers, e.g. three or four fingers, located about the upset on the second body. The annular portion is preferably in close proximity to, or touching, the surface of the upset on the second body. Preferably, the outer diameter of the annular portion is in close proximity to the inner diameter of the mouth of the first body. Advantageously, the first securing member is retained on the second body so that it cannot get lost. Further advantageously, assembly is possible by simply pushing the second body into the mouth of the first body with the first securing member already retained thereon. Thus, as the first securing member begins to enter the mouth, the outer diameter of the annular retaining portion being a close fit in the bore of the mouth, the first securing member cannot be removed from the second body, i.e. it is trapped on the second body and whatever force is needed to fully insert the first securing member can be exerted by pushing the second body.

Preferably, the second securing member is in the form of a ring or cylinder for location about the second body. More preferably, the second securing member is for location in the space between the second body and the first securing member. Thus, the second member may be a smaller annular member for location about the second body but inside the first securing member.

The sealing means comprises at least one sealing member between the first and second body.

Typically, the sealing means may comprise an O-ring as these are convenient, simple, economic and readily available in a wide range of sizes and suitable for water and gas sealing applications, for example. However, any suitable type of sealing means may be used depending upon the application and/or environment in which the connector fitting is to be used. Thus, seals may be made of elastomers, plastics materials, metals and composite materials, for example, as appropriate. Similarly, the sealing means may include composite multi-piece seals, for example, if required in the application.

Preferably, the sealing means is located spaced from the upset portion of the second body. Preferably, the sealing means is located within a narrower diameter region of the first body mouth portion for sealing engagement with the surface of the second body. However, where small diameter fittings are involved, e.g. where the second body has a small diameter, the sealing means preferably and conveniently is for location immediately below the upset portion, i.e. between the upset portion of the second body and the first body. Other sealing members, such as a washer, may be provided. In some embodiments, the sealing means may be provided on the second body.

The bodies and the securing members may be made from various materials, e.g. metal, plastics etc. Preferably, the securing members are made from plastics.

The invention provides a simple, but reliable construction of fitting. It will be appreciated that the number of components is small. The fitting is capable of easy assembly and can be push fitted thus not requiring a complex and time consuming operation on a production line for example. Furthermore, some or all of the components: the sealing means, the first securing member and the second securing member may be located on the second body prior to assembling the fitting. For example, the first and second securing members could be located on the second body before the upset is formed on the second body. Thus, the operation of assembly of the fitting is particularly simple and there is less scope for mislaying components. The first securing member can engage both the first body and second body and the second securing member can engage with the first securing member and the first body to add to the strength of the fitting. Moreover, the fitting is able to withstand high pressures, e.g. in a hydraulic application but any high pressure fluid may be contained by the fitting. In addition, the fitting can be used to make a mechanical joint, without any internal pressure within the fitting, in which the joint is able to withstand very high pull-out forces. Still further, the securing members and sealing means may each be located at least partially, preferably mainly, within the mouth of the first body, making the fitting very compact, aesthetically superior and less prone to damage from external impacts.

Another embodiment of fitting may be made in which the components, the sealing means, the first securing member and the second securing member, are not necessarily fitted on the second body prior to forming the upset portion thereon and do not require access from the other end of the second body. In such an embodiment, the first securing member is split, i.e. into two or more parts, such that it can be fitted around the second body, or alternatively is deformable at its inward end so as to fit over the upset. This embodiment may also require an additional collar which is similarly split or deformable which is for location around the second body between the upset of the second body and the first securing member. The second securing member may be similarly split or deformable.

In yet another embodiment, a second securing member may not be required. The first securing member is preferably made of plastics, spring steel or other deformable or resilient material. The first securing member may be a relatively close fit in the mouth, between the first body and second body. The first securing member may substantially fill the space between the first and second bodies. A projection or the like on the first securing member may be arranged to drop into the recess in the inlet or mouth of the first body on insertion of the first securing member to positively locate the securing member in the first body. A cap or flange on the first securing member may be located outside the first body and may be used to lever or pull the securing member from the mouth of the first body when disconnection is required.

The present invention has several advantages over connectors of the prior art, these advantages including: no threaded members; simple, push-fit assembly; component parts cannot be over-tightened; cannot work loose; cannot be assembled incorrectly as the locking ring cannot be inserted unless the retaining ring is fully seated in its desired position; and, the performance of the seal is determined by the dimensions of the parts of the fitting not by the quality or otherwise of the assembly process by an individual.

Embodiments of the invention will now be described by way of example only and with reference to:
Figure 1 which shows a cross-sectional schematic side view of a fitting according to the invention;
Figure 2 which shows a cross-sectional side view of a first securing member according to the invention;
Figure 3 which shows a plan view of the first securing member shown in Figure 2;
Figure 4 which shows a cross-sectional view of a fitting according to the invention in the form of a connection;
Figure 5 which shows a cross-sectional schematic side view as in figure 1 but further shows means for assisting retention of the second body in a fitting according to the invention;
Figure 6 which shows a cross-sectional schematic side view of a part of a means for assisting retention of the second body;
Figure 7 which shows a cross-sectional schematic side view of a part of a further embodiment of a means for assisting retention of the second body;
Figure 8 which shows a cross-sectional schematic side view of a fitting according to the invention having an alternative location of sealing means;
Figure 9 which shows a cross-sectional schematic side view of part of a further embodiment of fitting according to the invention;
Figure 10 which shows a cross-sectional schematic side view of a further embodiment of fitting according to the invention;
Figure 11 which shows a cross-sectional schematic side view of a still further embodiment of fitting according to the invention;
Figure 12 which shows a cross sectional view of a further embodiment of a fitting according to the present invention;
Figure 13 which shows a schematic cross sectional view of an alternative embodiment of means for retaining a tubular member in a fitting according to the invention; and
Figure 14 which shows a cross sectional view of a yet further alternative embodiment of a fitting according to the present invention.

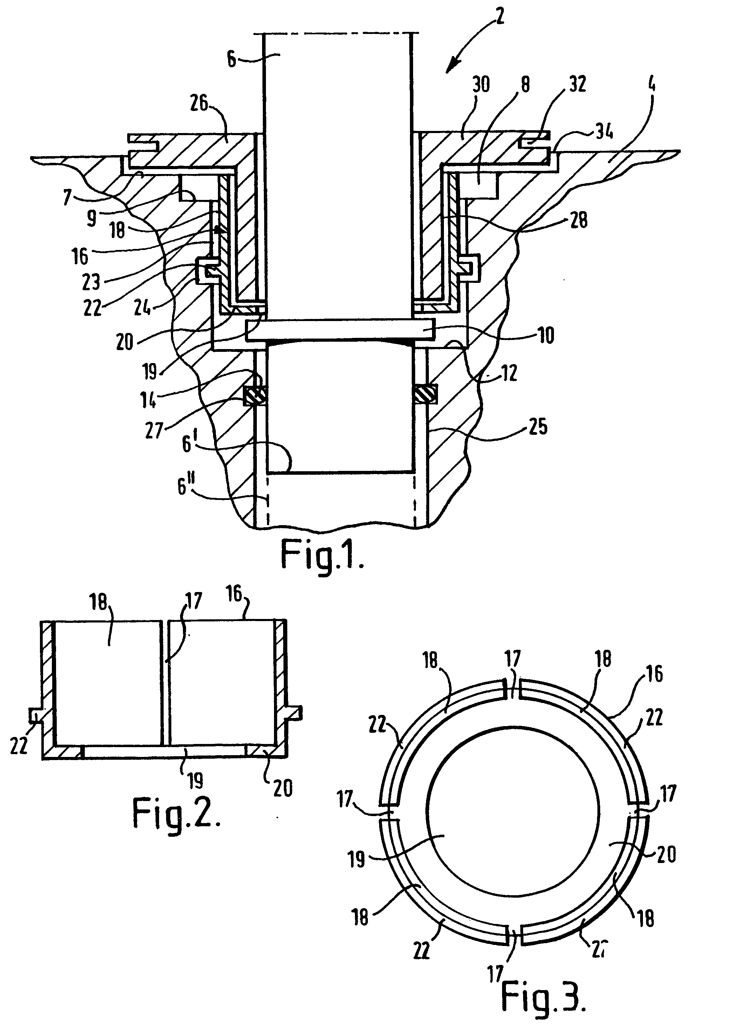

Referring to Figure 1 there is shown a fitting (2) in accordance with the invention. The fitting comprises a first body (4) having an inlet in the form of mouth portion (8). The first body (4) forms part of an operating unit such as a brake cylinder on a motor vehicle. A hollow tubular member (6) is located in the mouth portion (8) of first body (4) as shown for communicating fluid with the interior of the body (4).

The mouth portion (8) comprises two stepped regions (7) and (9) near its inlet, leading to the inner wall (23) of the mouth (8). The first stepped region (7) provides for accommodation of part of a flange end of the locking ring (26) as described in more detail below. The second stepped region (9) provides access around the end of the retaining ring (16) to allow compression of the ring (16) to facilitate removal. The end (6') of the tubular member (6) terminates inside a narrower bore region (25) of mouth (8) as shown. However, the tubular member (6) could extend further, as shown by dotted line (6"), into the body 4.

The tubular member (6) is provided with an upset portion (10) projecting circumferentially around the surface of the tubular member (6) which fits inside the inner wall (23) of the mouth (8). The spatial overlap between the extent of the upset portion (10) and radial abutment surface (12) at the base of the mouth portion (8) limits the distance of travel of the tubular member (6) in the body (4). An O-ring (14) is located in a recess (27) in the bore (25) of the mouth to provide a high pressure seal between the body (4) and the tubular member (6).

The tubular member (6) is secured in the body (4) by means of a first securing member in the form of a retaining ring (16). The retaining ring (16) comprises a longitudinally extending annular wall (18) and a radially inwardly directed end wall (20) having an aperture (19) in the centre thereof to accommodate tubular member (6). The end (20) of the retaining ring (16) engages the upset (10) of the tubular member (6). Retaining ring (16) further has an outwardly directed peripheral projection (22) longitudinally spaced from the end (20) which engages in a recess (24) in the wall (23) of the mouth (8).

The retaining ring (16) is provided with four longitudinally directed slits (17) in its longitudinal wall (18), the four slits being equi-distantly spaced around the ring (16), thus dividing the longitudinally extending wall (18) into four sections. In this way, the wall (18) of the ring (16) is radially deformable.

The ring (16) is held in engagement with the upset (10) of tubular member (6) and in engagement in recess (24) of body (4) by means of locking ring (26). Locking ring (26) comprises longitudinally extending annular portion (28) and radially outwardly extending end flange portion (30). The locking ring (26) is located in the fitting with the longitudinally extending portion (28) lying between tubular member (6) and the inner surface of retaining ring (16) so as to occupy the space therebetween and thereby prevent removal of the projection (22) from the recess (24). In this way, the retaining ring (16) is prevented from longitudinal movement and thereby tubular member (6) is likewise prevented from longitudinal movement. The radial flange portion (30) of locking ring (26) is provided with a circumferential recess (32) in its side edge (34). The purpose of circumferential recess (32) is to permit a removal tool to be inserted therein for levering the locking ring (26) from the fitting for disassembly.

In operation, the tubular member (6) is inserted into the inlet of body (4) so that the upset (10) abuts against surface (12). Retaining ring (16) is then inserted into the inlet of body (4) so as to engage tubular member (6). To enable this, the deformable annular wall (18) of ring (16) is deformed inwards to allow circumferential projection (22) on the outside of ring (16) to pass inside the inner walls of mouth portion (8) until the end (20) of ring (16) engages upset (10) on tubular member (6). In this position, the projection (22) is located adjacent recess (24) at which point the ring (16) can be allowed to radially outwardly reform such that projection (22) locates in recess (24). Finally, locking ring (26) is inserted to fill the region between tubular member (6) and ring (16) to prevent any subsequent inward radial deformation of ring (16) and thereby keep projection (22) firmly located in recess (24). With projection (22) firmly located, retaining ring (16) is prevented from longitudinal movement. Tubular member (6), by virtue of engagement of upset (10) with end wall (20) of ring (16), is thereby also prevented from longitudinal movement.

For unsecuring tubular member (6) from body (4), the assembly (2) is disassembled by generally reversing the above operation. The lever tool (not shown) is inserted in recess (32) of locking ring (26) and the ring (26) is pulled and/or levered away from the fitting. Once ring (26) has been removed, retaining ring (16) is removed by radially inwardly deforming the ends of wall portions (18) remote from the end (20), thereby releasing projection (22) thereon from recess (24) in the mouth of body (4). Ring (16) may then be axially withdrawn from the mouth portion (8) of body (4). Tubular member (6) is then free to be removed from body (4).

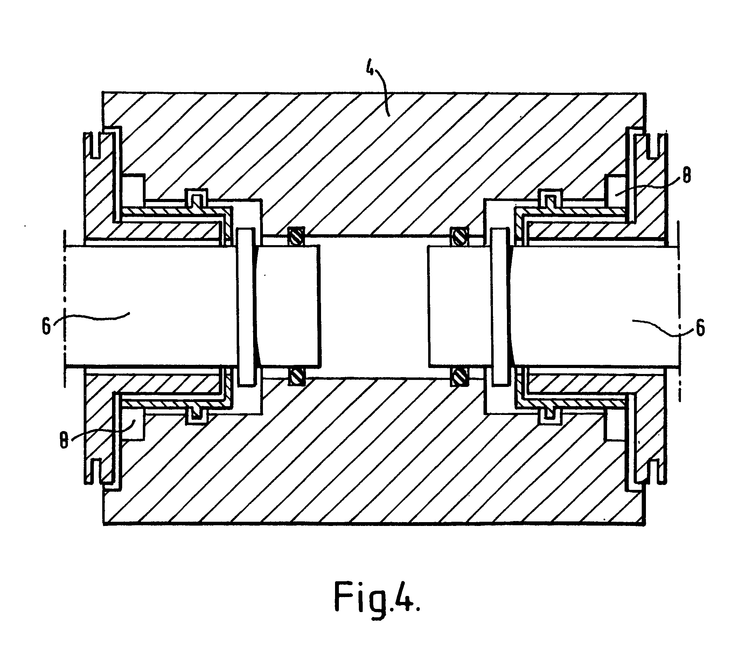

Whilst Figure 1 illustrates body (4) as part of an operating unit or block, body (4) may equally be a connector as shown, for example, in Figure 4. The body (4) in this case has two mouth portions, positioned at each end, which each receive a tubular member (6). Thus, body (4) forms a connector for two tubular members (6). It will be appreciated that the connector body (4) may be made other than as a straight coupling as shown in Figure 4 and may take other forms, e.g. a T-shape fitting for joining three pipes. Moreover, the one or more other mouth portions may be provided with other fittings than that according to the invention.

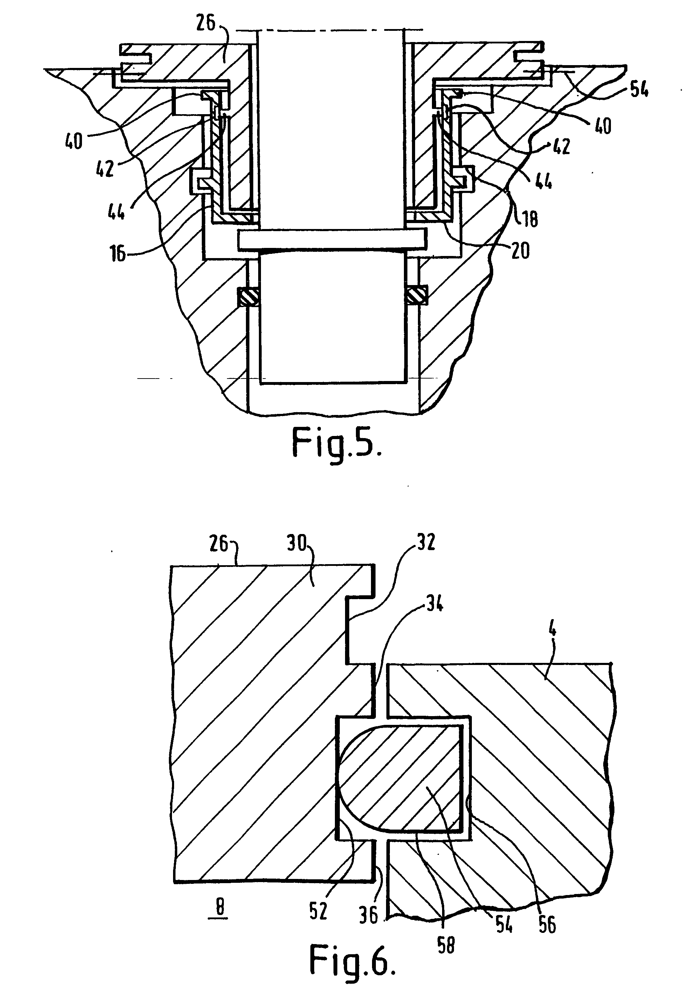

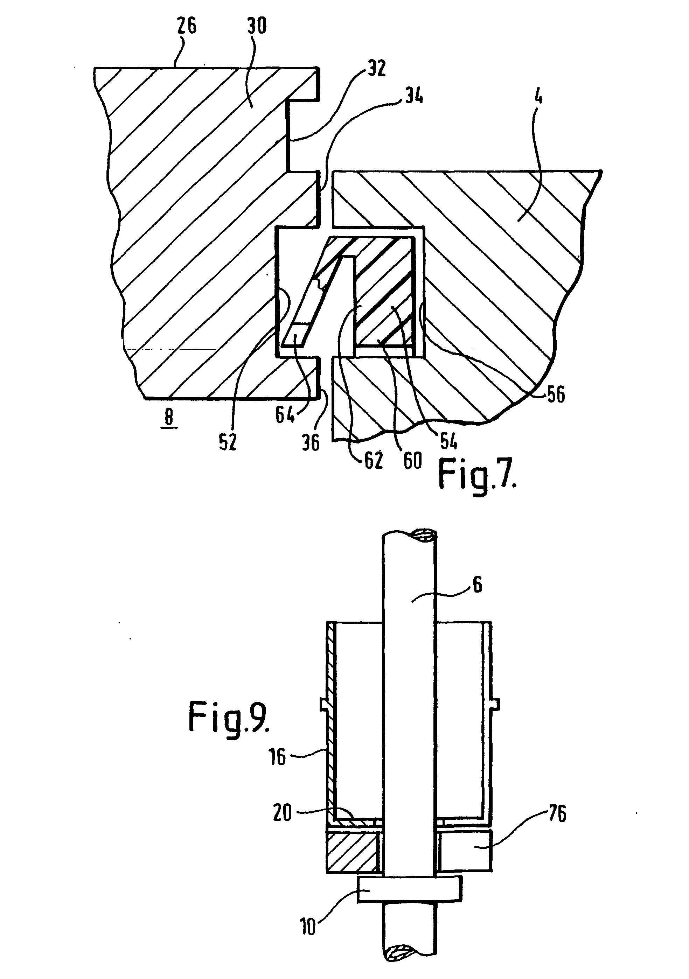

Referring to Figure 5 there is shown a further embodiment of fitting according to the invention generally as shown in Figure 1 except that the retaining ring (16) is provided at its distal end, i.e. end remote from end (20), with a radially outwardly directed peripheral lug (40) for the purpose of locating a tool for gripping ring (16) for the purpose of insertion or removal of the ring. In addition, or alternatively, the ring (16) may also be provided with a circumferential recess (42) in the inner surface of wall (18) near to its distal end. The purpose of recess (42) is for circumferential projection (44) on the surface of locking ring (26) to engage therein, thereby providing more positive retention of locking ring (26) in the fitting. A still further means of positive retention of locking ring (26) in the fitting, which may be in addition to or as an alternative to the aforementioned means, comprise a clip means the position of which is indicated generally at (54). The clip means (54) is located either in a circumferential recess in the side of flange (30) of the ring (26) and adapted to engage, e.g. by spring action, into an adjacent circumferential recess in the wall of mouth (8), or vice versa. The clip means (54) may take one of various forms, preferred examples of which are shown in Figures 6 and 7.

Referring to Figure 6 there is shown part of flange (30) of locking ring (26) having a circumferential groove (52) in the side (34) thereof. A corresponding circumferential recess (56) in the wall of the mouth (8) of body (4) is provided for location, in use, adjacent groove (52). A clip means (54) in the form of an inwardly biased circlip (58) is located in the groove (56), so that, upon insertion of ring (26), the circlip is initially deformed outwards until front portion (36) of side (34) of flange (30) has passed the circlip, and then circlip (58) reforms inwardly to engage in recess (52) in the flange of ring (26).

Referring to Figure 7, there is shown a similar arrangement for clip means (54), except that the clip means (54) comprises a hook means (60). The hook means (60) comprises a plastic body (62) in the form of a ring for location in groove (56) in body (4), and has depending therefrom in generally downward and inwardly angled direction a deformable hook or barb member (64). Upon insertion of ring (26), the barb member (64) is initially outwardly deformed until it snaps back into groove (52) in the ring (26) as shown thereby to retain ring (26).

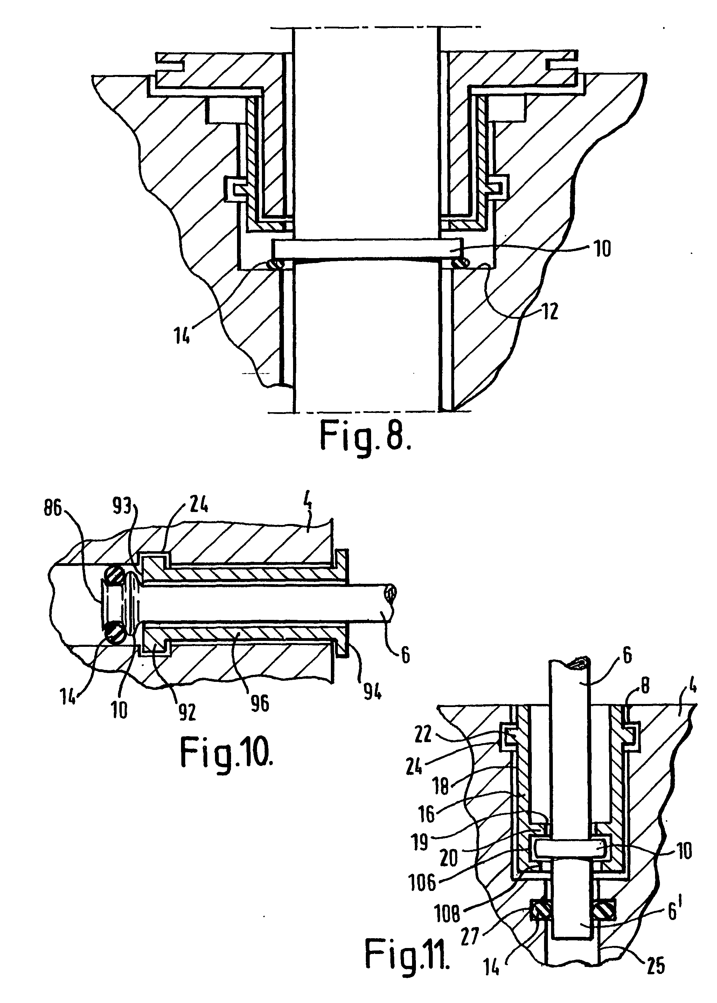

Referring to Figure 8, there is shown an alternative location for O-ring seal (14) which is particularly suitable for small diameter fittings. Instead of locating the O-ring in bore (25), O-ring (14) is located between the upset portion (10) and the abutment surface (12) to provide a high pressure seal between the body (4) and the tubular member (6).

In operation, the O-ring (14) is inserted into the bottom of mouth portion (8) in the inlet of body (4) so that the O-ring rests on surface (12). The tubular member (6) is then inserted into the inlet of body (4) so that the upset (10) seals against O-ring (14). Alternatively, the O-ring may be placed on the tubular member (6) just in front of the upset (10) so that insertion of the tubular member (6) automatically locates the 0-ring in the position shown.

Referring to Figure 9, an embodiment of fitting is shown in which the retaining ring (16) and the locking ring (26) (not shown), may be fitted on the second body (6) after forming the upset portion (10) thereon and does not require access from the other end of the second body (6). The retaining ring (16) is split, i.e. into two parts or halves, such that the halves can be fitted around the second body (6). Alternatively, the retaining ring (16) is deformable at its inward end (20) so as to fit over the upset. The embodiment also may have an additional collar (76) which may be similarly split into two halves, or may have a single split and be deformable, and is for location around the second body (6) between the upset (10) of the second body (6) and the retaining ring (16). Collar (76) provides an enlarged diameter part for ring (16) to engage. In this way, the aperture in the end (20) of ring (16) may pass over the upset (10) on body (6) and instead ring (16) prevents movement of body (6) by engaging with collar (76).

Referring to Figure 10 there is shown a further assembly in accordance with the invention. The assembly comprises a first body (4) having an inlet for receiving a gas pipe (6) as shown. The first body (4) forms part of an adapter such as found on a gas stove for linking the pipe (6) to a gas supply (not shown). The pipe (6) may lead from the adapter to the burner on the gas stove.

The inlet has a substantially parallel sided cylindrical bore. The flared end (86) of the tubular member (6) terminates inside the bore as shown. The flared end (86) enables an O-ring (14) to be located between the flared end and a circumferential projection (10) on the pipe. The O-ring (14) provides a high pressure seal between the pipe (6) and the inlet of the body (4). Alternatively, the O-ring could be located in the body (4) as shown in the embodiments of Figures 1-9.

The pipe (6) is secured in the body (4) by means of a securing member in the form of retaining ring (96) which is made of a plastics material. The retaining ring (96) comprises a longitudinally extending annular sleeve for the pipe (6) having a circumferential radially outwardly extending end portion (92). The retaining ring (96) is a close fit in the space between the pipe (6) and the wall of the inlet in body (4) which restricts movement of the pipe (6). The end (93) of the retaining ring (96) engages the projection (10) of the pipe (6). The outwardly extending portion (92) engages in a circumferential recess (24) in the wall of the inlet to positively retain the ring (96) in the inlet.

The other end of the retaining ring (96) is provided with a radially outwardly extending end flange portion (94) which lies outside the inlet of the body (4). The flange portion (94) can be used to remove the ring (96) by levering or pulling the flange portion (94) away from the inlet.

In operation, the end of pipe (6), with O-ring 14 located thereon as shown, is inserted into the inlet of body (4) as shown. Retaining ring (96), which is already on the pipe (6), is then pushed into the inlet so as to fill the space in the inlet around the pipe. The projection (92) is pressed against wall of the inlet during the initial insertion. The ring (96) is pushed in until projection (92) on the ring (96) is located adjacent recess (24) in the inlet at which point the projection (92) relaxes radially outwardly such that projection (92) slots into recess (24). With projection (92) firmly located, retaining ring (96) is prevented from longitudinal movement in the inlet. In this arrangement, pipe (6) is prevented from being removed from the inlet by virtue of engagement of projection (10) with the end (93) of the retaining ring (96).

For releasing pipe (6) from body (4), a lever can be used underneath the flanged end (94) of the retaining ring (96) to pull the projection (92) from the recess (24) and thereby permit withdrawal of ring (96) from the inlet. Once ring (96) has been removed, pipe (6) can be axially withdrawn from the inlet. It will be appreciated that in the embodiment shown in Figure 10 only a single securing ring is required to hold the pipe (6) in the inlet thus simplifying the arrangement.

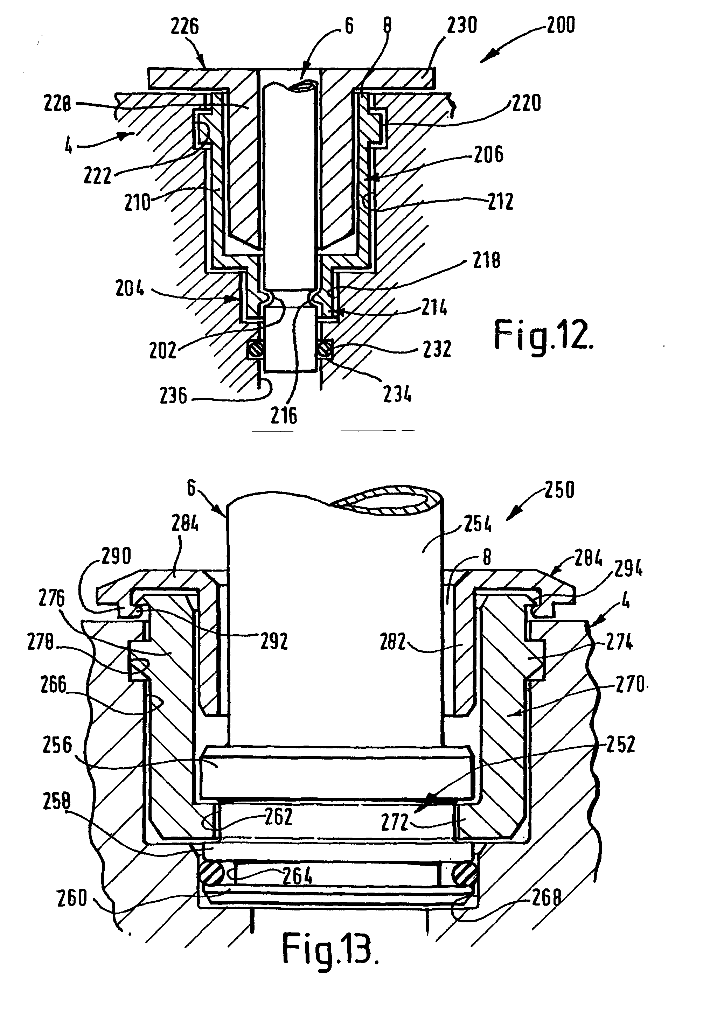

Referring to Figure 11 there is shown a fitting in accordance with another embodiment of the invention. The fitting comprises a first body (4) having an inlet in the form of mouth portion (8). A hollow tubular member (6) is located in the mouth portion (8) of first body (4) as shown, for example for communicating fluid with the interior of the body (4).

The mouth portion (8) is substantially circular cylindrical. The end (6') of the tubular member (6) terminates inside a narrower bore region (25) of mouth (8) as shown. An O-ring (14) is located in a peripheral recess (27) in the narrower bore (25) of the mouth to provide a high pressure seal between the body (4) and the tubular member (6).

The tubular member (6) is provided with an upset portion (10) projecting circumferentially around the surface of the tubular member (6) which fits inside the mouth (8).

The tubular member (6) is secured in the body (4) by means of a first securing member in the form of a retaining ring (16). The retaining ring (16) comprises a longitudinally extending annular wall (18) and a radially inwardly directed portion (20) having an aperture (19) in the centre thereof to accommodate tubular member (6). The radially inwardly directed portion (20) of the retaining ring (16) engages the upset (10) of the tubular member (6). The retaining ring (16) is retainable on the tubular member (6) by locking over the upset (10) on the tubular member. In order for retaining ring (16) to lock over the upset (10), the retaining ring comprises an annular portion (106) for location over the upset and another radially inwardly directed portion (108) for location on the other side of the upset to the radially inwardly directed portion (20), thereby to retain the retaining ring (16) on the upset.

Inwardly directed potion (108) also overlaps the upset (10) but the radially inwardly directed portion (108) may extend radially inwardly to a lesser extent than the radially inwardly directed portion (20).

The annular portion (106) is resilient so that before insertion in the mouth (8) of the first body (4) it may deform radially outwardly to allow the radially inwardly directed portion (108) to be fitted over the upset (10) and then reform again to positively locate the annular portion over the upset as shown. The annular portion (106) is in close proximity to the surface of the upset and the inner diameter of the mouth of the first body (4) when inserted in the mouth to prevent removal of the ring (16) from the upset (10) on the tubular member (6) once inside the mouth.

The retaining ring (16) further has an outwardly directed peripheral projection (22) longitudinally spaced from the end with annular portion (106), which engages in a recess (24) in the wall of the mouth (8) in order to retain the retaining ring (16) in the first body (4).

The ring (16) may be held such that its projection (22) stays in engagement in recess (24) of body (4) by means of a locking ring (not shown) which can be inserted between the tubular member (6) and the retaining ring (16), e.g. similar to locking ring (26) as shown in Figure 1. In this way, the retaining ring (16) is prevented from longitudinal movement and thereby tubular member (6) is likewise prevented from longitudinal movement in the mouth (8) of the first body (4).

In operation, the retaining ring (16), by means of its resilient annular portion (106) and radially inwardly directed portions (20) and (108) can be clipped over the upset (10) on the tubular member (6) prior to insertion in the mouth (8) of the first body (4). Then the tubular member (6) can be pushed into the mouth of the first body (4) with the retaining ring (16) .already retained thereon. The outer diameter of the retaining ring, including annular portion (106) are a close fit in the bore of the mouth (8). Thus, as retaining ring (16) begins to enter the mouth, the retaining ring (16) cannot be removed from the tubular member (6), i.e. it is trapped on the upset (10) of the tubular member (6) and the required force needed to fully insert the retaining ring (16) can be exerted by pushing the tubular member (6).

The annular wall (18) of ring (16) is deformable so that it can be deformed inwards to allow circumferential projection (22) on the outside of ring (16) to pass inside the inner walls of mouth portion (8) until the projection (22) is located adjacent recess (24) at which point the ring (16) can radially outwardly reform such that projection (22) locates in recess (24). Optionally, as mentioned above, ring (16) may be held in place such that its projection 22 stays in engagement in recess (24) of body (4) by means of a locking ring (not shown) which can be inserted between the ring (16) and tubular member (6). With projection (22) firmly located, retaining ring (16) is prevented from longitudinal movement. Tubular member (6), by virtue of engagement of upset (10) with radially inwardly directed portion (20) of ring (16), is thereby also prevented from withdrawal from the mouth (8) of the first body.

Figure 12 shows a fitting 200 wherein the raised collar or upset 10 of previous embodiments is replaced by a depression or groove 202 extending around the periphery of the second body 6. The first body 4 has a mouth portion 8 to receive the body 6, the mouth portion having a first diameter which reduces to a second, smaller diameter portion 204. A retaining ring 206 having a first diameter portion which is in the form of a longitudinally extending wall 210 which co-operates with the bore 212 of the first diameter portion of the mouth 8. At an inward end of the retaining ring 206 is a reduced diameter portion 214 which has a radially inwardly directed projection 216 which fits into the groove 202 in the second body 6. The bore 218 of the reduced diameter portion 204 of the body 4 fits closely around the reduced diameter portion 214 of the retaining ring 206 so as to prevent disengagement of the projection 216 from the groove 202. The retaining ring 206 may have a longitudinal split (not shown) and be flexible so that it may be opened out in the radial direction so that the second body 6 (in this case a fluid conduit) may be inserted therein. Alternatively, the retaining ring may be in two or more generally diametrally split halves so as to be placeable around the second body 6 and composed of a relatively stiff material, for example. The retaining ring and second body are held in the first body 4 by engagement of a peripheral projection 220 on the outer diameter of the retaining ring 206 with a co-operating peripheral recess 222 in the bore of the first diameter portion of the mouth 8. The projection 220 is prevented from disengaging from the recess 222 by a locking ring 226 which fits around the second body 6 and, in use, resides in the annular gap formed between the retaining ring 206 and the second body 6. The locking ring 226 has an annular, axially extending body portion 228 which lies between the second body 6 and the retaining ring annular portion 210 and a flange portion 230 which enables a user to apply pressure to inset in the fitting or, alternatively, to grip and withdraw so that the fitting may be disassembled. The second body 6 is sealed to the first body 4 by means of a sealing member 232 lying in a groove 234 in a third, yet smaller, diameter portion 236 of the first body 4.

The annular body portion 210 of the retaining ring 206 may be provided with axially directed slits (not shown) in the manner shown with respect to Figures 2 and 3 hereinabove such that the projection 220 may be withdrawn from the recess 222 after removal of the locking ring 226 in order to disassemble the fitting 200.

Figure 13 shows an embodiment 250 where the second body, a fluid conduit, is provided with a nose portion 252 which is of greater diameter than at least the adjacent portion 254 of the second body 6. The nose portion has three circumferentially directed projecting portions 256, 258, 260 which are of greater diameter than the diameter of the portion 254. The nose portion may be formed, for example, from a conduit having a thicker wall section thereat and forming the grooves 262 and 264 therein. Alternatively, the projections may be formed, for example, by upsetting of a conduit of substantially constant wall thickness. The body 4 has a first diameter portion 266 adjacent a mouth 8 and a second, smaller diameter portion 268 axially inwardly therefrom. The second body 6 is retained in the body 4 by retaining ring 270 which has an inwardly directed flange portion 272 which fits in the groove 262 defined between the projecting portions 256 and 258 in the nose 252. The retaining ring has an outwardly directed circumferential projection 274 on an annular wall portion 276 of the retaining ring and which projection co-operates with a recess 278 in the wall of the first diameter portion 266. The projection 274 is prevented from becoming disengaged from the recess 278 by a locking ring 280 inserted between the retaining ring 270 and second body portion 254 thus preventing the wall 276 of the retaining ring 270 from being moved radially inwardly. The locking ring 280 has an axially directed annular wall portion 282 and a flange portion 284 for purposes as described with reference to preceding embodiments. However, the flange portion 284 has a rim portion 290 downwardly directed towards the body 4 and an inwardly directed lip 292 therearound. The lip 292 co-operates with an outwardly directed lip 294 on the end of the wall portion 276 of the retaining ring 270 so as to maintain the retaining ring and locking ring in engagement and prevent inadvertent withdrawal of the locking ring.

However, the two lips 292 and 294 form a resilient catch which may be intentionally disengaged by applying force to the locking ring 280 in an outwardly direction. The nose portion 252 of the conduit 6 is sealed to the first body 4 by means of a sealing ring 298 lying in the groove 264 defined by the circumferential projections 258 and 260 and sealing against the bore of second diameter portion 268 of body 4.

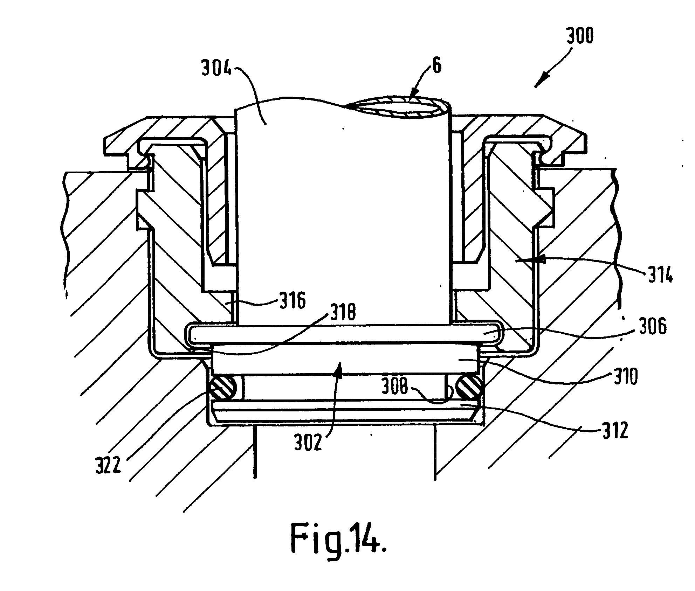

Figure 14 shows a further embodiment 300 of a fitting according to the present invention similar, in some of the principles included therein, to those described with reference to Figures 11 and 13. In this embodiment the end of the second body 6, a conduit, has an enlarged diameter portion 302 compared with the diameter of the adjacent portion 304. The end portion 302 has a circumferential projection 306 which forms a portion of greatest diameter on the second body 6 and a groove 308 adjacent the end of the second body. Similarly, as with Figure 13, the end portion 302 may be part of a conduit having a thicker wall portion at the end and the features of projection 306 and groove 308 may be formed therein by any means. Alternatively, the projection 308 may be formed by upsetting of a substantially constant thickness wall and, the groove 308 formed between two upset portions 310, 312. A retaining ring 314 similar in form to that of the ring 16 of Figure 11 has a radially inwardly turned flange portion 316 and a second, smaller radially inwardly turned flange portion in the form of a lip 318, the flange 316 and lip 318 lying either side of projection 306 with the lip 318 at the more inwardly end of the fitting. However, in contrast to the embodiment of Figure 11, the lip' 318 forms a resilient feature enabling the retaining ring 314 to be easily clipped and unclipped from the end of the second body 6. The operation and features of construction of the remainder of the retaining ring 314 and locking ring 320 are essentially the same as those described with respect to Figure 13 so will not be described further. A sealing ring 322 is provided in the groove 308 as with other embodiments to seal the second body 6 to the fitting body 4.

The locking ring features of Figures 6 or 7 may be applied to the embodiments described in Figures 13 and/or 14, for example, by suitable modification of the body and locking and/or retaining rings. Similarly, the features of the retaining ring 16 of Figures 1 to 3 relating to the axial splits 17, for example, may be employed in any of the other embodiments, where suitable, if desired. Features relating to the sealing of the second body 6 to the first body may be effected by any suitable means including "O" rings, washers, injected liquid curable sealants and the like.

## Claims

1. An assembly (2) for securing two bodies, the assembly comprising a first body (4), the first body having a mouth portion (8) for receiving a second body (6), and means (16) for securing the first body to the second body, means (14) for sealing the first body against the second body, the securing means comprising, a first securing member (16) for engagement (10, 20) with the second body, the first securing member being for at least partial location inside the mouth portion and has means for engagement (22, 24) with the first body thereby to prevent removal of the second body from the mouth portion of the first body, a second securing member (26) for holding said first securing member in engagement with said first body, the assembly being **characterised by** said second securing member being at least partially located inside the mouth portion between the second body and the first securing member.

2. An assembly according to claim 1 wherein the second securing member holds said first securing member in engagement with said second body.

3. An assembly according to either claim 1 or claim 2 wherein the second body is a pipe (6).

4. An assembly according to any one preceding claim wherein the second body is provided with an upset or protrusion (10) on its external surface.

5. An assembly according to claim 4 wherein the upset is circumferentially extending.

6. An assembly according to either claim 4 or claim 5 wherein the first securing member engages (20) with the upset or protrusion.

7. An assembly according to claim 6 wherein an end of the first securing member engages with the upset or protrusion.

8. An assembly according to any one preceding claim from 4 to 7 wherein said upset or protrusion limits the extent of forward travel of the second body into the first body.

9. An assembly according to any one of claims 1 to 3 wherein said second body has a groove (202) on its external surface for engagement with said first securing member.

10. An assembly according to any one previous claim wherein the first securing member is in the form of a ring or cylinder (18) for location around the second body.

11. An assembly according to claim 10 wherein the ring or cylinder is radially deformable.

12. An assembly for securing two bodies according to either claim 10 or claim 11 wherein the ring or cylinder has a plurality of longitudinal slits (17).

13. An assembly according to any one of preceding claims 10 to 12 wherein the ring or cylinder is circumferentially discontinuous over at least a portion of its length.

14. An assembly according to any one of preceding claims 10 to 13 wherein an end of the first securing member remote from an end which is for engaging the second body is resiliently deformable.

15. An assembly according to any one previous claim wherein a recess (24) is provided in the first body such that the first securing member is engagable (22) in the recess.

16. An assembly according to claim 15 wherein the recess is circumferentially extending.

17. An assembly for securing two bodies according to either claim 15 or claim 16 wherein the recess is in a wall (23) of a mouth portion of the first body.

18. An assembly according to any one of preceding claims 15 to 17 wherein the first securing member has one or more projections (22) on an external surface to engage with said recess.

19. An assembly according to claim 18 wherein the projection comprises a circumferentially extending projection.

20. An assembly according to either claim 18 or claim 19 wherein the one or more projections engage said recess on insertion of said first securing member into said first body.

21. An assembly according to any one preceding claim wherein the first securing member is retainable on the second body.

22. An assembly according to claim 21 wherein the first securing member (16; 206) is retainable on the upset (10) or protrusion or groove (202) on the second body.

23. An assembly according to claim 22 wherein means for retaining the first securing member on the second body may be provided at or near an end of the first securing member which engages the upset or protrusion or groove on the second body.

24. An assembly according to claim 23 wherein a means for retaining the first securing member on the second body comprises an annular portion (106) for location over the upset (10) on the second body and radially inwardly directed portions (20; 108) for location on either side of the upset, thereby to retain the first securing member on the upset of the second body.

25. An assembly according to any one preceding claim wherein the first securing member comprises two or more parts.

26. An assembly according to any one of preceding claim from 1 to 25 wherein said second securing member is a smaller annular shaped member which fits inside said first securing member.

27. An assembly according to claim 25 further including a collar (76) located around the second body between the upset or protrusion of the second body and the first securing member.

28. An assembly according to any one previous claim wherein the second securing member comprises two or more parts.

29. An assembly according to any one of claims 1 to 28 wherein a cap or flange (30) on the second securing member is located outside of the first body, in use, and is suitable for use in pulling the securing member from the mouth of the first body when disconnection is required.

30. An assembly for securing two bodies according to any one previous claim wherein the securing members are made from plastics materials.

31. An assembly according to any one preceding claim wherein said second securing member is retained in said first body by means of a resiliently deformable member (54).

32. An assembly according to claim 31 wherein the resiliently deformable member is a circlip which co-operates with adjacent recesses on said first body and on said second securing member.

33. An assembly according to any one preceding claim wherein the first body is an operating unit in a motor vehicle.

34. An assembly according to any one of preceding claims 1 to 32 wherein the first body is an adapter for connecting a pipe on a gas appliance.

35. An assembly according to any one of preceding claims 1 to 32 wherein the first body is a connector for joining the second body to another body.

36. An assembly according to claim 35 wherein the first body is a connector for joining two or more pipes.

## Patentansprüche

1. Anordnung (2) zum Befestigen zweier Körper, wobei die Anordnung folgendes aufweist: einen ersten Körper (4), der einen Mündungsabschnitt (8) zur Aufnahme eines zweiten Körpers (6) umfaßt, und Mittel (16) zum Befestigen des ersten Körpers am zweiten Körper sowie Mittel (14) zum Abdichten des ersten Körpers gegenüber dem zweiten Körper, wobei die Befestigungsmittel ein erstes Befestigungsteil (16) zum Eingriff (10, 20) mit dem zweiten Körper umfassen und das erste Befestigungsteil zumindest teilweise im Inneren des Mündungsabschnittes angeordnet wird und Mittel zum Eingriff (22, 24) mit dem ersten Körper aufweist, um dadurch ein Entfernen des zweiten Körpers vom Mündungsabschnitt des ersten Körpers zu verhindern, sowie ein zweites Befestigungsteil (26) zum Halten des ersten Befestigungsteils im Eingriff mit dem ersten Körper, wobei die Anordnung **dadurch gekennzeichnet ist, daß** das zweite Befestigungsteil zumindest teilweise im Inneren des Mündungsabschnittes zwischen dem zweiten Körper und dem ersten Befestigungsteil angeordnet ist.

2. Anordnung nach Anspruch 1, bei der das zweite Befestigungsteil das erste Befestigungsteil in Eingriff mit dem zweiten Körper hält.

3. Anordnung nach Anspruch 1 oder Anspruch 2, bei welcher der zweite Körper ein Rohr (6) ist.

4. Anordnung nach einem vorhergehenden Anspruch, bei welcher der zweite Körper an seiner Außenfläche mit einer Stauchung oder einem Vorsprung (10) versehen ist.

5. Anordnung nach Anspruch 4, bei der die Stauchung in Umfangsrichtung verläuft.

6. Anordnung nach Anspruch 4 oder Anspruch 5, bei der das erste Befestigungsteil in Eingriff (20) mit der Stauchung oder dem Vorsprung steht.

7. Anordnung nach Anspruch 6, bei der ein Ende des ersten Befestigungsteiles in Eingriff mit der Stauchung oder dem Vorsprung steht.

8. Anordnung nach einem vorhergehenden Anspruch von 4 bis 7, bei der die Stauchung oder der Vorsprung das Maß des Einschiebens des zweiten Körpers in den ersten Körper begrenzt.

9. Anordnung nach einem der Ansprüche 1 bis 3, bei der der zweite Körper an seiner Außenfläche eine Nut (202) zum Eingriff mit dem ersten Befestigungsteil aufweist.

10. Anordnung nach einem vorhergehenden Anspruch, bei der das erste Befestigungsteil in Form eines Rings oder Zylinders (18) zur Anordnung um den zweiten Körper herum vorliegt.

11. Anordnung nach Anspruch 10, bei welcher der Ring oder Zylinder radial verformbar ist.

12. Anordnung zum Befestigen zweier Körper nach Anspruch 10 oder Anspruch 11, bei welcher der Ring oder Zylinder eine Vielzahl von Längsschlitzen (17) aufweist.

13. Anordnung nach einem der vorhergehenden Ansprüche 10 bis 12, bei welcher der Ring oder Zylinder in Umfangsrichtung über zumindest einen Teil seiner Länge unterbrochen ist.

14. Anordnung nach einem der vorhergehenden Ansprüche 10 bis 13, bei der ein Ende des ersten Befestigungsteils, das von einem Ende zum Eingriff mit dem zweiten Körper entfernt ist, elastisch verformbar ist.

15. Anordnung nach einem vorhergehenden Anspruch, bei der im ersten Körper eine Ausnehmung (24) so vorgesehen ist, daß das erste Befestigungsteil in Eingriff (22) mit der Ausnehmung treten kann.

16. Anordnung nach Anspruch 15, bei der die Ausnehmung in Umfangsrichtung verläuft.

17. Anordnung zum Befestigen zweier Körper gemäß Anspruch 15 oder Anspruch 16, bei der die Ausnehmung in einer Wand (23) eines Mündungsabschnittes des ersten Körpers vorliegt.

18. Anordnung nach einem der vorhergehenden Ansprüche 15 bis 17, bei der das erste Befestigungsteil einen oder mehrere Vorsprünge (22) an einer Außenseite zum Eingriff mit der Ausnehmung aufweist.

19. Anordnung nach Anspruch 18, bei welcher der Vorsprung einen in Umfangsrichtung verlaufenden Vorsprung umfaßt.

20. Anordnung nach Anspruch 18 oder Anspruch 19, bei welcher der eine oder die mehreren Vorsprünge beim Einsetzen des ersten Befestigungsteils in den ersten Körper in Eingriff mit der Ausnehmung treten.

21. Anordnung nach einem vorhergehenden Anspruch, bei der das erste Befestigungsteil am zweiten Körper haltbar ist.

22. Anordnung nach Anspruch 21, bei der das erste Befestigungsteil (16, 206) an der Stauchung (10) oder dem Vorsprung oder der Nut (202) am zweiten Körper haltbar ist.

23. Anordnung nach Anspruch 22, bei der Mittel zum Halten des ersten Befestigungsteils am zweiten Körper an oder nahe einem Ende des ersten Befestigungsteils vorgesehen sein können, welches in die Stauchung oder den Vorsprung oder die Nut am zweiten Körper eingreift.

24. Anordnung nach Anspruch 23, bei der ein Mittel zum Halten des ersten Befestigungsteils am zweiten Körper einen ringförmigen Abschnitt (106) zum Anordnen über der Stauchung (10) am zweiten Körper und radial nach innen gerichtete Abschnitte (20; 108) zum Anordnen auf beiden Seiten der Stauchung umfaßt, um dadurch das erste Befestigungsteil an der Stauchung des zweiten Körpers zu halten.

25. Anordnung nach einem vorhergehenden Anspruch, bei der das erste Befestigungsteil zwei oder mehr Teile umfaßt.

26. Anordnung nach einem der vorhergehenden Ansprüche 1 bis 25, bei der das zweite Befestigungsteil ein kleineres, ringförmiges Teil ist, das in dem ersten Befestigungsteil sitzt.

27. Anordnung nach Anspruch 25, ferner mit einer Manschette (76), die um den zweiten Körper herum, zwischen der Stauchung oder dem Vorsprung des zweiten Körpers und dem ersten Befestigungsteil, angeordnet ist.

28. Anordnung nach einem vorhergehenden Anspruch, bei der das zweite Befestigungsteil zwei oder mehr Teile umfaßt.

29. Anordnung nach einem der Ansprüche 1 bis 28, bei der eine Kappe oder ein Flansch (30) bei Benutzung am zweiten Befestigungsteil außerhalb des ersten Körpers angeordnet ist und zur Verwendung beim Abziehen des Befestigungsteils von der Mündung des ersten Körpers brauchbar ist, wenn eine Trennung erforderlich ist.

30. Anordnung zum Befestigen zweier Körper nach einem vorhergehenden Anspruch, bei der die Befestigungsteile aus Kunststoff bestehen.

31. Anordnung nach einem vorhergehenden Anspruch, bei der das zweite Befestigungsteil in dem ersten Körper mittels eines elastisch verformbaren Teils (54) gehalten wird.

32. Anordnung nach Anspruch 31, bei der das elastisch verformbare Teil eine Schlauchklemme ist, die mit benachbarten Ausnehmungen am ersten Körper und am zweiten Befestigungsteil zusammenwirkt.

33. Anordnung nach einem vorhergehenden Anspruch, bei der der erste Körper ein Bedienungsgerät in einem Kraftfahrzeug ist.

34. Anordnung nach einem der vorhergehenden Ansprüche 1 bis 32, bei der der erste Körper ein Adapter zum Anschluß eines Rohrs an ein Gasgerät ist.

35. Anordnung nach einem der vorhergehenden Ansprüche 1 bis 32, bei der der erste Körper ein Anschluß zum Verbinden des zweiten Körpers mit einem anderen Körper ist.

36. Anordnung nach Anspruch 35, bei der der erste Körper ein Anschluß zum Verbinden zweier oder mehrerer Rohre ist.

## Revendications

1. Ensemble (2) pour fixer deux corps, l'ensemble comprenant un premier corps (4), le premier corps comportant une partie (8) d'embouchure destinée à recevoir un second corps (6), et un moyen (16) destiné à fixer le premier corps au second corps, un moyen (14) destiné à sceller le premier corps contre le second corps, le moyen de fixation comprenant un premier élément (16) de fixation pour engagement (10, 20) avec le second corps, le premier élément de fixation étant prévu pour au moins un emplacement partiel à l'intérieur de la partie d'embouchure et comporte un moyen pour engagement (22, 24) avec le premier corps pour empêcher ainsi un retrait du second corps de la partie d'embouchure du premier corps, un second élément (26) de fixation destiné à maintenir ledit premier élément de fixation en engagement avec ledit premier corps, l'ensemble étant **caractérisé en ce que** ledit second élément de fixation est au moins partiellement situé à l'intérieur de ladite partie d'embouchure entre le second corps et le premier élément de fixation.

2. Ensemble selon la revendication 1, dans lequel le second élément de fixation maintient ledit premier élément de fixation en engagement avec ledit second corps.

3. Ensemble selon la revendication 1 ou la revendication 2, dans lequel le second corps est un conduit (6).

4. Ensemble selon l'une quelconque des revendications précédentes, dans lequel le second corps est pourvu d'un refoulement ou d'une avancée (10) sur sa surface extérieure.

5. Ensemble selon la revendication 4, dans lequel le refoulement s'étend de manière circonférentielle.

6. Ensemble selon la revendication 4 ou la revendication 5, dans lequel le premier élément de fixation est en prise (20) avec le refoulement ou l'avancée.

7. Ensemble selon la revendication 6, dans lequel une extrémité du premier élément de fixation s'engage avec le refoulement ou l'avancée.

8. Ensemble selon l'une quelconque des revendications précédentes de 4 à 7, dans lequel ledit refoulement ou ladite avancée limite l'étendue de trajet vers l'avant du second corps dans le premier corps.

9. Ensemble selon l'une quelconque des revendications 1 à 3, dans lequel ledit second corps comporte une rainure (202) sur sa surface extérieure pour engagement avec ledit premier élément de fixation.

10. Ensemble selon l'une quelconque des revendications précédentes, dans lequel le premier élément de fixation a la forme d'un anneau ou cylindre (18) pour positionnement autour du second corps.

11. Ensemble selon la revendication 10, dans lequel l'anneau ou le cylindre peut se déformer radialement.

12. Ensemble pour fixer deux corps selon l'une ou l'autre de la revendication 10 ou de la revendication 11, dans lequel l'anneau ou le cylindre comporte une pluralité de fentes longitudinales (17).

13. Ensemble selon l'une quelconque des revendications précédentes 10 à 12, dans lequel l'anneau ou le cylindre est discontinu de manière circonférentielle sur au moins une partie de sa longueur.

14. Ensemble selon l'une quelconque des revendications précédentes 10 à 13, dans lequel une extrémité du premier élément de fixation, à distance d'une extrémité qui est destinée à engager le second corps, peut se déformer élastiquement.

15. Ensemble selon l'une quelconque des revendications précédentes, dans lequel un évidement (24) est prévu dans le premier corps de sorte que le premier élément de fixation peut être engagé (22) dans l'évidement.

16. Ensemble selon la revendication 15, dans lequel l'évidement s'étend de manière circonférentielle.

17. Ensemble pour fixer deux corps selon l'une ou l'autre de la revendication 15 ou de la revendication 16, dans lequel l'évidement se trouve dans une paroi (23) d'une partie d'embouchure du premier corps.

18. Ensemble selon l'une quelconque des revendications précédentes 15 à 17, dans lequel le premier élément de fixation comporte une ou plusieurs saillies (22) sur une surface extérieure, destinées à s'engager dans ledit évidement.

19. Ensemble selon la revendication 18, dans lequel la saillie comprend une saillie s'étendant de manière circonférentielle.

20. Ensemble selon la revendication 18 ou la revendication 19, dans lequel la ou les plusieurs saillies s'engagent dans ledit évidement lors de l'introduction dudit premier élément de fixation dans ledit premier corps.

21. Ensemble selon l'une quelconque des revendications précédentes, dans lequel le premier élément de fixation peut être maintenu sur le second corps.

22. Ensemble selon la revendication 21, dans lequel le premier élément (16 ; 206) de fixation peut être maintenu sur le refoulement ou l'avancée (10) ou dans la rainure (202) du second corps.

23. Ensemble selon la revendication 22, dans lequel on peut prévoir un moyen destiné à maintenir le premier élément de fixation sur le second corps au niveau, ou au voisinage, d'une extrémité du premier élément de fixation qui s'engage dans le refoulement ou l'avancée, ou la rainure du second corps.

24. Ensemble selon la revendication 23, dans lequel un moyen destiné à maintenir le premier élément de fixation sur le second corps comprend une partie annulaire (106) pour positionnement sur le refoulement (10) du second corps et des parties (20 ; 108) orientées radialement vers l'intérieur pour positionnement de chaque côté du refoulement, pour ainsi maintenir le premier élément de fixation sur le refoulement du second corps.

25. Ensemble selon l'une quelconque des revendications précédentes, dans lequel le premier élément de fixation comprend deux parties, ou plus.

26. Ensemble selon l'une quelconque des revendications précédentes de 1 à 25, dans lequel ledit second élément de fixation est un élément plus petit de forme annulaire qui s'ajuste à l'intérieur dudit premier élément de fixation.

27. Ensemble selon la revendication 25, incluant en outre un collier (76) situé autour du second corps entre le refoulement ou l'avancée du second corps et le premier élément de fixation.

28. Ensemble selon l'une quelconque des revendications précédentes, dans lequel le second élément de fixation comprend deux parties, ou plus.

29. Ensemble selon l'une quelconque des revendications 1 à 28, dans lequel, en utilisation, un chapeau ou rebord (30) du second élément de fixation est situé à l'extérieur du premier corps et est approprié pour une utilisation consistant à tirer l'élément de fixation de l'embouchure du premier corps lorsqu'un découplage est nécessaire.

30. Ensemble pour fixer deux corps selon l'une quelconque des revendications précédentes, dans lequel les éléments de fixation sont réalisés à partir de matières plastiques.

31. Ensemble selon l'une quelconque des revendications précédentes, dans lequel ledit second élément de fixation est maintenu dans ledit premier corps au moyen d'un élément pouvant se déformer élastiquement (54).

32. Ensemble selon la revendication 31, dans lequel l'élément pouvant se déformer élastiquement est un circlip qui coopère avec des évidements adjacents situés sur ledit premier corps et sur ledit second élément de fixation.

33. Ensemble selon l'une quelconque des revendications précédentes, dans lequel le premier corps est un module fonctionnel pour un véhicule à moteur.

34. Ensemble selon l'une quelconque des revendications précédentes 1 à 32, dans lequel le premier corps est un adaptateur destiné à raccorder un conduit à une installation à gaz.

35. Ensemble selon l'une quelconque des revendications précédentes 1 à 32, dans lequel le premier corps est un raccord servant à raccorder le second corps et un autre corps.

36. Ensemble selon la revendication 35, dans lequel le premier corps est un raccord servant à raccorder deux ou davantage de conduits.
